# EUROPEAN PATENT SPECIFICATION

(11) **EP 3 370 002 B1**
(45) Date of publication and mention of the grant of the patent: **11.03.2020**
(21) Application number: 15907266.9
(22) Date of filing: 29.10.2015
(51) Int. Cl.: F24F 7/08, F24F 12/00, F24F 13/20

(54) **HEAT EXCHANGING VENTILATION DEVICE**
WÄRMETAUSCHENDE BELÜFTUNGSVORRICHTUNG
DISPOSITIF DE VENTILATION À ÉCHANGE DE CHALEUR

(43) Date of publication of application: 05.09.2018
(73) Proprietor: Mitsubishi Electric Corporation, Chiyoda-ku Tokyo 100-8310 (JP)
(72) Inventor: SHIOMI, Kouhei, Tokyo 102-0073 (JP)
(74) Representative: Pfenning, Meinig & Partner mbB
(86) International application number: PCT/JP2015/080499
(87) International publication number: WO 2017/072902

(56) References cited:
- EP-A1- 1 376 023
- JP-A- H03 137 446
- JP-A- H03 137 446
- JP-A- H07 332 727
- JP-A- H09 137 984
- JP-A- 2005 214 470
- JP-A- 2005 282 981
- JP-A- 2007 127 391
- JP-A- 2011 075 118
- JP-A- 2014 092 324
- JP-A- 2014 092 333
- JP-U- H 053 833
- JP-U- H 053 833

## Description

### Field

The present invention relates to a heat-exchange ventilation apparatus that provides ventilation while allowing heat exchange between a supply airflow and a discharge airflow.

### Background

A heat-exchange ventilation apparatus includes a built-in heat exchanger that allows air-to-air heat exchange and provides ventilation by simultaneously supplying and discharging air while allowing the heat exchange. The heat exchanger includes a supply air path for introducing air that is located outside a room to the inside of the room and a discharge air path for discharging air that is located inside the room to the outside of the room. In Patent Literature 1, a heat-exchange ventilation apparatus is disclosed that is for installation in a space above a ceiling and includes a supply air fan and a discharge air fan on one side of a heat exchanger.

In the heat-exchange ventilation apparatus disclosed in Patent Literature 1, the supply air fan, which is located in a supply air path and generates a supply airflow that passes from a room-exterior inlet port to a room-interior outlet port, and the discharge air fan, which is located in a discharge air path and generates a discharge airflow that passes from a room-interior inlet port to a room-exterior outlet port, are placed such that the rotation shafts of their blades, that is, the motor rotation shafts are perpendicular to a bottom surface of a casing.

The heat-exchange ventilation apparatus disclosed in Patent Literature 1 has an inspection opening for fan maintenance in a side face of the housing to facilitate attachment and detachment of the fans during maintenance, in addition to an inspection opening for heat exchanger maintenance. The heat-exchange ventilation apparatus disclosed in Patent Literature 1 includes a rail member that includes a guide portion in which a bent portion of a fan fixing plate is fitted, thereby allowing the fans, which are heavy objects, to be pulled out from the housing without being lifted by hand.

### Citation List

### Patent Literature

Patent Literature 1: Japanese Patent Application Laid-open No. 2014-92324

### Summary

### Technical Problem

For a ceiling-mounted-type heat-exchange ventilation apparatus as described in Patent Literature 1, however, an entire fan unit is removed with a scroll casing still attached, and thus, the work is hard although the removal is done by sliding the unit on the rail member.

The present invention has been achieved in view of the above, and an object of the present invention is to provide a heat-exchange ventilation apparatus that allows removal of a fan assembly that does not include a scroll casing of a fan unit.

### Solution to Problem

To solve the problem described above and achieve the object described above, a heat-exchange ventilation apparatus according to the present invention is as defined in claim 1. It includes a casing including a supply air path to supply air that is located outside a room to an inside of the room and a discharge air path to discharge air that is located inside the room to an outside of the room; a heat exchanger placed in the casing to allow heat exchange between a supply airflow that passes through the supply air path and a discharge airflow that passes through the discharge air path; a supply-air fan unit fixed in the casing to generate the supply airflow; and a discharge-air fan unit fixed in the casing to generate the discharge airflow. According to the present invention, the casing has a fan-maintenance opening portion in a bottom surface, each of the supply-air fan unit and the discharge-air fan unit includes: a fan to generate the supply airflow or the discharge airflow; a fan motor to rotate the fan; and a scroll casing, on one face side of which the fan motor is placed, the scroll casing including a bell mouth portion in another face facing the one face to admit air, the scroll casing accommodating the fan. At least one of the supply-air fan unit and the discharge-air fan unit is movable in an axial direction of the fan motor toward a counter-motor-side air path that communicates with the air inlet port when fixing to the casing is released, and a fan assembly that includes the fan motor and the fan is removable from the casing through the maintenance opening portion when the fan assembly is separated from the scroll casing.

### Advantageous Effects of Invention

A heat-exchange ventilation apparatus according to the present invention produces an effect of allowing removal of a fan assembly that does not include a scroll casing of a fan unit.

### Brief Description of Drawings

FIG. 1 is a perspective view of a heat-exchange ventilation apparatus according to an embodiment of the present invention on the top surface side.
FIG. 2 is a perspective view of the heat-exchange ventilation apparatus according to the embodiment on the bottom surface side.
FIG. 3 is a diagram illustrating flows of air inside a casing of the heat-exchange ventilation apparatus according to the embodiment.
FIG. 4 is a perspective view of a fan unit of the heat-exchange ventilation apparatus according to the embodiment.
FIG. 5 is a sectional side view of the fan unit of the heat-exchange ventilation apparatus according to the embodiment.
FIG. 6 is a plan view of the fan unit of the heat-exchange ventilation apparatus according to the embodiment as viewed from the side where a fan motor is placed.
FIG. 7 is a plan view of the fan unit of the heat-exchange ventilation apparatus according to the embodiment as viewed from the side opposite the side where the fan motor is placed.
FIG. 8 is a perspective view of the fan unit of the heat-exchange ventilation apparatus according to the embodiment.
FIG. 9 is a diagram illustrating the placement of the fan units of the heat-exchange ventilation apparatus according to the embodiment as viewed from an outlet-port side face.
FIG. 10 is a diagram illustrating a supply-air outer fan unit of the heat-exchange ventilation apparatus according to the embodiment as viewed from the outlet-port side face when the supply-air outer fan unit has been slid.
FIG. 11 is a diagram illustrating how fan units of the heat-exchange ventilation apparatus according to the embodiment are removed.
FIG. 12 is a perspective view of the fan motor of the supply-air fan units and the discharge-air fan units of the heat-exchange ventilation apparatus according to the embodiment.

### Description of Embodiments

A heat-exchange ventilation apparatus according to an embodiment of the present invention will be described in detail below with reference to the drawings. The present invention is defined by the claims and is not limited to the embodiment.

### Embodiment.

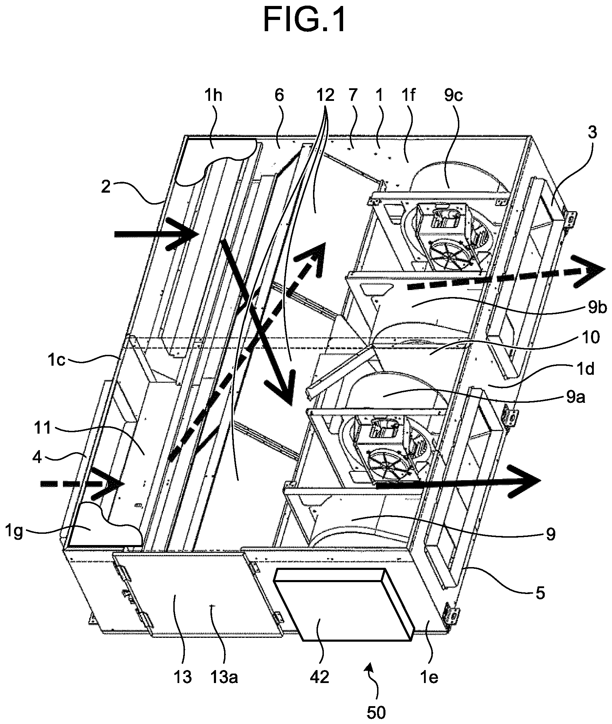

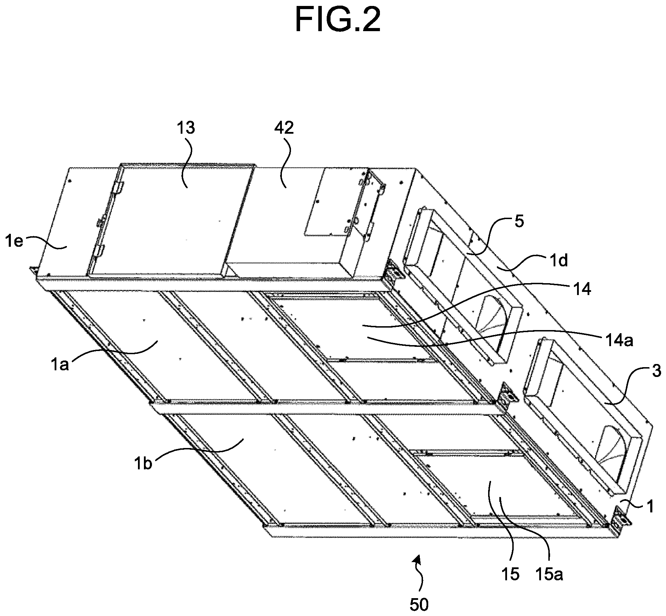

FIG. 1 is a perspective view of a heat-exchange ventilation apparatus according to an embodiment of the present invention on the top surface side. FIG. 2 is a perspective view of the heat-exchange ventilation apparatus according to the embodiment on the bottom surface side. A heat-exchange ventilation apparatus 50 admits air from a space to be air-conditioned and discharges the air to the outside of the space to be air-conditioned while it admits air from the outside of the space to be air-conditioned and supplies the air to the space to be air-conditioned. Specific examples of the space to be air-conditioned can include a house, a building, and a warehouse. In the description below, the space to be air-conditioned is the inside of a room of a house. "Air that is located outside a room" corresponds to "supply air" to be supplied to the inside of the room by the heat-exchange ventilation apparatus 50, and "air that is located inside the room" corresponds to "discharge air" to be discharged to the outside of the room by the heat-exchange ventilation apparatus 50.

The heat-exchange ventilation apparatus 50 is of a ceiling-mounted type and includes a casing 1 that configures a housing; a heat exchanger 12 that allows heat exchange between a supply airflow and a discharge airflow; a supply-air outer fan unit 9 and a supply-air inner fan unit 9a that generate the supply airflow; a discharge-air inner fan unit 9b and a discharge-air outer fan unit 9c that generate the discharge airflow; and an open/close damper 11 that switches between passing and blocking of the discharge airflow to the heat exchanger 12.

The casing 1 is a cuboidal box and has an inlet-port side face 1c that has a room-exterior inlet port 2 and a room-interior inlet port 4; an outlet-port side face 1d that faces the inlet-port side face 1c and has a room-exterior outlet port 3 and a room-interior outlet port 5; a room-interior side face 1e that has a heat-exchanger opening portion 13a for removal and installation of the heat exchanger 12; a room-interior bottom face 1a that has a supply-air-fan opening portion 14a for removal and installation of the supply-air outer fan unit 9 and the supply-air inner fan unit 9a; a room-exterior bottom face 1b that has a discharge-air-fan opening portion 15a for removal and installation of the discharge-air inner fan unit 9b and the discharge-air outer fan unit 9c; a room-exterior side face 1f that faces the room-interior side face 1e; a room-interior top face 1g that faces the room-interior bottom face 1a; and a room-exterior top face 1h that faces the room-exterior bottom face 1b. A control box 42 that accommodates a control circuit is placed on the room-interior side face 1e. The room-interior side face 1e is described as it is on the "room-interior" side of the heat-exchange ventilation apparatus 50 because air that is located inside the room is admitted into a space including a corner portion formed between the room-interior side face 1e and the inlet-port side face 1c, and the room-exterior side face 1f is described as it is on the "room-exterior" side of the heat-exchange ventilation apparatus 50 because air that is located outside the room is admitted into a space including a corner portion formed between the room-exterior side face 1f and the inlet-port side face 1c. That is, the orientation in which the heat-exchange ventilation apparatus 50 is installed is not limited to an orientation where the room-interior side face 1e faces the room-interior side and the room-exterior side face 1f faces the room-exterior side.

The heat exchanger 12, the supply-air outer fan unit 9, the supply-air inner fan unit 9a, the discharge-air inner fan unit 9b, and the discharge-air outer fan unit 9c are installed inside the casing 1. The supply-air outer fan unit 9 and the supply-air inner fan unit 9a are air supplying fan units that generate a supply airflow. The discharge-air inner fan unit 9b and the discharge-air outer fan unit 9c are discharge-air fan units that generate a discharge airflow. The supply-air outer fan unit 9 is placed in proximity to the room-interior side face 1e, and the supply-air inner fan unit 9a is placed in proximity to the center of the casing 1. The discharge-air inner fan unit 9b and the discharge-air outer fan unit 9c are placed on the side where the outlet-port side face 1d is located and also on the side where the room-exterior side face 1f is located. The supply-air outer fan unit 9 and the supply-air inner fan unit 9a are placed side by side in a direction parallel with the inlet-port side face 1c and the outlet-port side face 1d. The discharge-air inner fan unit 9b is placed in proximity to the center of the casing 1, and the discharge-air outer fan unit 9c is placed in proximity to the room-exterior side face 1f. The discharge-air inner fan unit 9b and the discharge-air outer fan unit 9c are placed side by side in the direction parallel with the inlet-port side face 1c and the outlet-port side face 1d.

The supply-air outer fan unit 9, the supply-air inner fan unit 9a, the discharge-air inner fan unit 9b, and the discharge-air outer fan unit 9c are fixed in the casing 1. Specifically, the supply-air outer fan unit 9 and the supply-air inner fan unit 9a are fixed to the room-interior bottom face 1a and the room-interior top face 1g by screws. The discharge-air inner fan unit 9b and the discharge-air outer fan unit 9c are fixed to the room-exterior bottom face 1b and the room-exterior top face 1h by screws.

A heat-exchanger maintenance panel 13 is placed over and blocks the heat-exchanger opening portion 13a. A supply-air-fan maintenance panel 14 is placed over and blocks the supply-air-fan opening portion 14a. A discharge-air-fan maintenance panel 15 is placed over and blocks the discharge-air-fan opening portion 15a. The supply-air-fan opening portion 14a and the discharge-air-fan opening portion 15a are fan-maintenance opening portions.

A supply air path 6 that provides communication between the room-exterior inlet port 2 and the room-interior outlet port 5 to supply air that is located outside the room to the inside of the room and a discharge air path 7 that provides communication between the room-interior inlet port 4 and the room-exterior outlet port 3 to discharge air that is located inside the room to the outside of the room are formed inside the casing 1. In FIG. 1, solid-line arrows represent a supply airflow passing through the supply air path 6, and broken-line arrows represent a discharge airflow passing through the discharge air path 7.

The room-exterior inlet port 2 and the room-interior outlet port 5 are located diagonally when viewed from above, and the room-interior inlet port 4 and the room-exterior outlet port 3 are located diagonally when viewed from above.

The entire supply air path 6 and the entire discharge air path 7 are isolated. The heat exchanger 12 is placed somewhere along the supply air path 6 and the discharge air path 7. The heat exchanger 12 is placed on the left side as viewed from the room-interior side face 1e side, that is, toward the inlet-port side face 1c with respect to the center of the casing 1.

The supply-air outer fan unit 9, the supply-air inner fan unit 9a, the discharge-air inner fan unit 9b, and the discharge-air outer fan unit 9c are located on a secondary side of the heat exchanger 12. That is, the supply-air outer fan unit 9 and the supply-air inner fan unit 9a are located on the side where the supply airflow is emitted from the heat exchanger 12. The discharge-air inner fan unit 9b and the discharge-air outer fan unit 9c are located on the side where the discharge airflow is emitted from the heat exchanger 12.

The heat exchanger 12 allows heat exchange between the supply airflow passing through the supply air path 6 and the discharge airflow passing through the discharge air path 7. The supply air path 6 and the discharge air path 7 intersect with each other inside the heat exchanger 12 via a partition wall that configures the heat exchanger 12. The heat exchange between the supply airflow passing through the supply air path 6 and the discharge airflow passing through the discharge air path 7 is performed via the partition wall inside the heat exchanger 12.

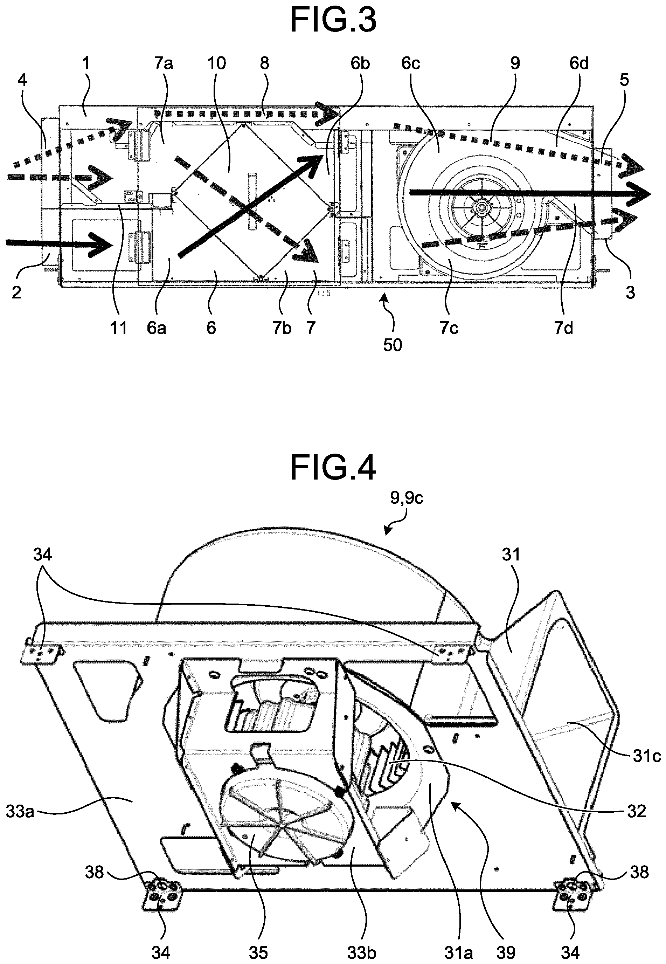

FIG. 3 is a diagram illustrating flows of air inside the casing of the heat-exchange ventilation apparatus according to the embodiment. In addition to the discharge air path 7, which intersects with the supply air path 6 inside the heat exchanger 12, the heat-exchange ventilation apparatus 50 according to the embodiment includes a bypass air path 8 for discharging the discharge airflow from the room-interior side to the room-exterior side. In FIG. 3, solid-line arrows represent the supply airflow passing through the supply air path 6, broken-line arrows represent the discharge airflow passing through the discharge air path 7, and dotted-line arrows represent a bypass airflow passing through the bypass air path 8.

The open/close damper 11 is placed between the room-interior inlet port 4 and the heat exchanger 12 and switches between discharging the discharge airflow from the room-interior side to the room-exterior side through the discharge air path 7 and discharging the discharge airflow from the room-interior side to the room-exterior side through the bypass air path 8 so as to switch between allowing the discharge airflow to flow through the heat exchanger 12 and not allowing the discharge airflow to flow through the heat exchanger 12.

As illustrated in FIG. 1, an internal air-path partition member 10 is placed so as to span between the heat exchanger 12 and the outlet-port side face 1d and fixed to the room-interior bottom face 1a by a screw in such a manner that the supply-air outer fan unit 9 and the supply-air inner fan unit 9a are isolated from the discharge-air inner fan unit 9b and the discharge-air outer fan unit 9c spatially and that the supply air path 6 and the discharge air path 7 are prevented from merging together.

While the supply-air outer fan unit 9 and the supply-air inner fan unit 9a are isolated from the discharge-air inner fan unit 9b and the discharge-air outer fan unit 9c spatially by the internal air-path partition member 10, the supply-air outer fan unit 9 is not isolated from the supply-air inner fan unit 9a and the discharge-air inner fan unit 9b is not isolated from the discharge-air outer fan unit 9c.

As illustrated in FIG. 3, the supply airflow, which passes through the supply air path 6, enters the casing 1 from the room-exterior inlet port 2, which is formed in the inlet-port side face 1c, passes through a pre-heat-exchanger-passage supply air path 6a and a post-heat-exchanger-passage supply air path 6b, then passes through a pre-supply-air-fan-unit-passage supply air path 6c and a post-supply-air-fan-unit-passage supply air path 6d, and is emitted to the room-interior side from the room-interior outlet port 5, which is formed in the outlet-port side face 1d.

The discharge airflow that passes through the discharge air path 7 enters the casing 1 from the room-interior inlet port 4, which is formed in the inlet-port side face 1c, passes through a pre-heat-exchanger-passage discharge air path 7a and a post-heat-exchanger-passage discharge air path 7b, then passes through a pre-discharge-air-fan-unit-passage discharge air path 7c and a post-discharge-air-fan-unit-passage discharge air path 7d, and is emitted to the room-exterior side from the room-exterior outlet port 3, which is formed in the outlet-port side face 1d.

The discharge airflow that passes through the bypass air path 8 enters the casing 1 from the room-interior inlet port 4, which is formed in the inlet-port side face 1c, passes through the bypass air path 8, then passes through the pre-discharge-air-fan-unit-passage discharge air path 7c and the post-discharge-air-fan-unit-passage discharge air path 7d, and is emitted to the room-exterior side from the room-exterior outlet port 3, which is formed in the outlet-port side face 1d.

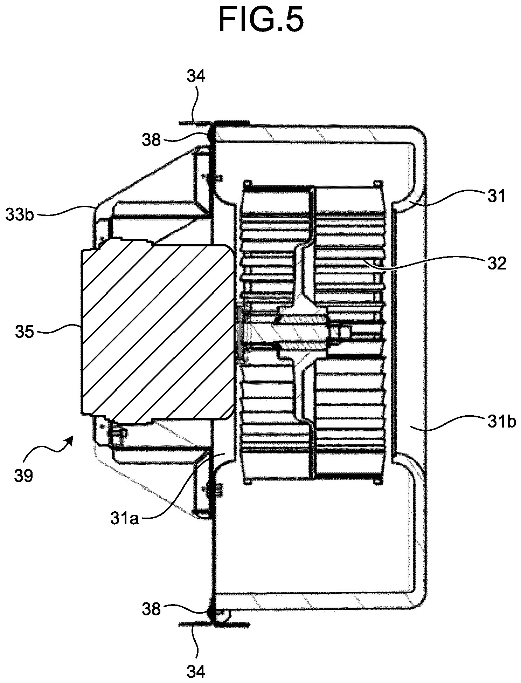

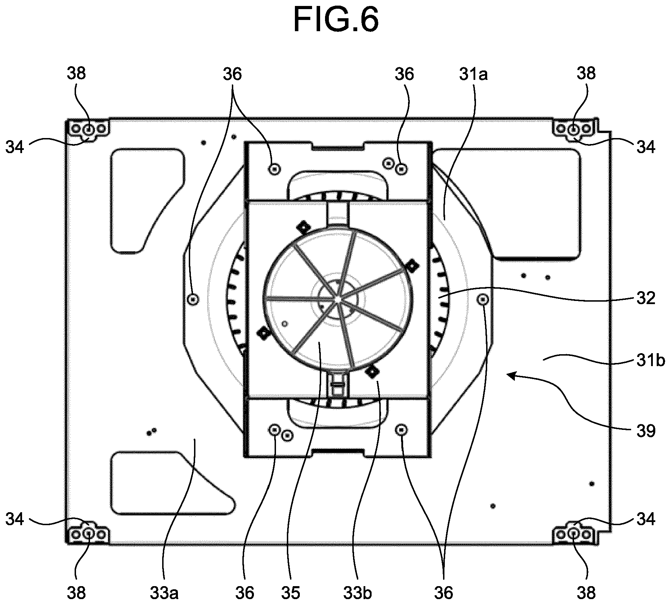

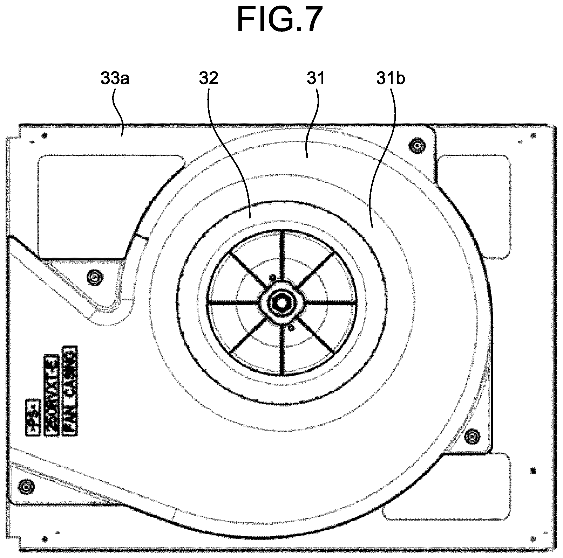

FIG. 4 is a perspective view of a fan unit of the heat-exchange ventilation apparatus according to the embodiment. FIG. 5 is a sectional side view of the fan unit of the heat-exchange ventilation apparatus according to the embodiment. FIG. 6 is a plan view of the fan unit of the heat-exchange ventilation apparatus according to the embodiment as viewed from the side where a fan motor is placed. FIG. 7 is a plan view of the fan unit of the heat-exchange ventilation apparatus according to the embodiment as viewed from the side opposite the side where the fan motor is placed. The side on which a fan motor 35 is placed is referred to as a "motor side", and the side opposite the side on which the fan motor 35 is placed is referred to as a "counter-motor side", hereinafter.

The supply-air outer fan unit 9 and the discharge-air outer fan unit 9c are each configured from a fan blade 32 that is a fan blade for generating a supply airflow or a discharge airflow; a scroll casing 31 that accommodates the fan blade 32; the fan motor 35, which rotates the fan blade 32; an air-path fixing portion 33a that supports the scroll casing; a fan-motor fixing portion 33b that supports the fan motor 35; and fan-unit fixing components 34 that are a fixing margin to the casing 1. The air-path fixing portion 33a and the fan-unit fixing components 34 are fixed to each other by screws 38.

In each of the supply-air outer fan unit 9 and the discharge-air outer fan unit 9c, the fan-unit fixing components 34 are fixed to the casing 1 by screws.

The scroll casing 31 is an integrally molded component that includes an inlet-type bell mouth portion 31b that encases the fan blade 32, which is configured as a sirocco fan, and an exit portion 31c that extends in an outgoing direction. The fan motor 35 is placed on one face side of the scroll casing 31. The scroll casing 31 includes a bell mouth portion 31a that admits air and is formed in the one face, on which the fan motor 35 is placed, and the bell mouth portion 31b, which admits air and is formed in the other face that faces the one face. The fan motor 35 is fixed to the fan-motor fixing portion 33b, which in turn is fixed by assembly fixing screws 36 to the air-path fixing portion 33a, which is located at the bottom portion of the scroll casing 31, and the motor shaft of the fan motor 35 supports the fan blade 32 rotatably. The fan motor 35 is placed such that the motor shaft is parallel with the room-interior bottom face 1a and the room-exterior bottom face 1b of the casing 1.

Each of the supply-air outer fan unit 9, the supply-air inner fan unit 9a, the discharge-air inner fan unit 9b, and the discharge-air outer fan unit 9c drives the fan motor 35 to enable the fan blade 32 to rotate and thereby causes air admitted from the bell mouth portion 31b, which is on the counter-motor side, and the bell mouth portion 31a, which is on the motor side, to flow along the rotation direction of the fan blade 32 and be emitted from the exit portion 31c of the scroll casing 31. The air emitted from the exit portion 31c is then emitted from the room-exterior outlet port 3 or the room-interior outlet port 5, which is placed in the outlet-port side face 1d, to the room-exterior side or the room-interior side.

The scroll casing 31 and the air-path fixing portion 33a are fixed to each other by screw-and-washer assemblies to provide intimate contact. A structure is thus provided that prevents the air admitted from the bell mouth portion 31b, which is on the counter-motor side, and the bell mouth portion 31a, which is on the motor side, from leaking from anywhere except the exit portion 31c of the scroll casing 31. That is, the air admitted into the scroll casing 31 is not emitted from any portion except the exit portion 31c.

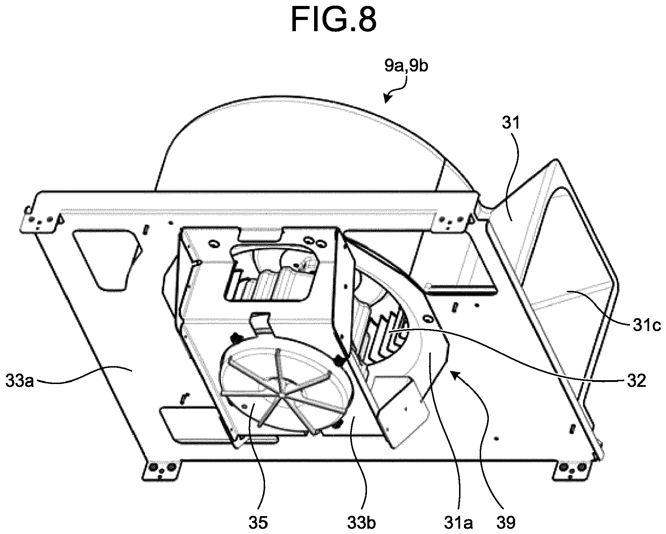

FIG. 8 is a perspective view of the fan unit of the heat-exchange ventilation apparatus according to the embodiment. The supply-air inner fan unit 9a and the discharge-air inner fan unit 9b are each configured from the scroll casing 31, the fan blade 32, the air-path fixing portion 33a, the fan-motor fixing portion 33b, and the fan motor 35. The supply-air inner fan unit 9a and the discharge-air inner fan unit 9b are similar to the supply-air outer fan unit 9 and the discharge-air outer fan unit 9c, except for the fan-unit fixing components 34 that are not provided in the supply-air inner fan unit 9a and the discharge-air inner fan unit 9b.

In each of the supply-air inner fan unit 9a and the discharge-air inner fan unit 9b, the air-path fixing portion 33a is fixed to the casing 1 by screws.

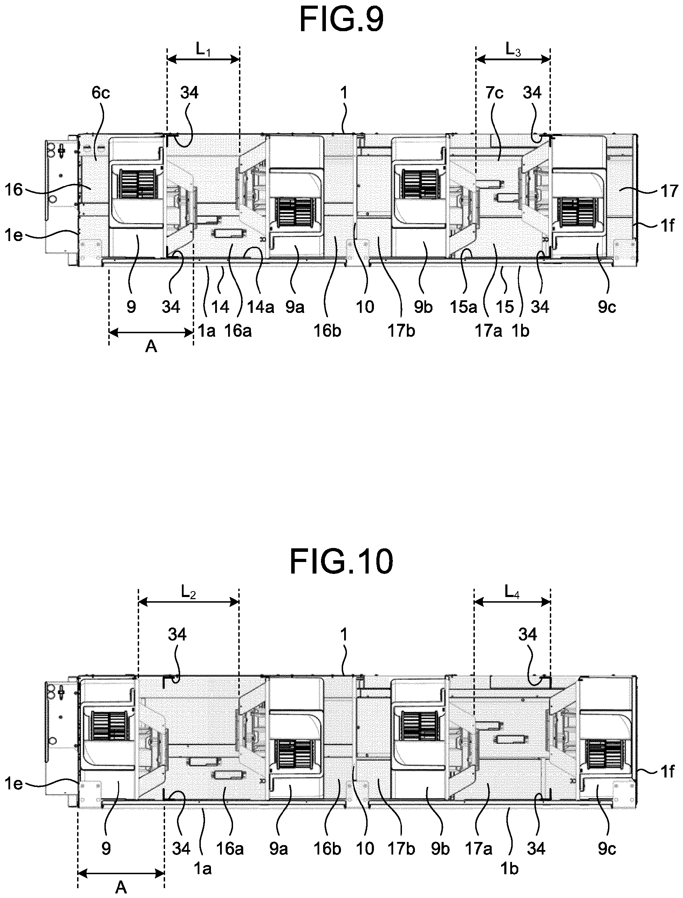

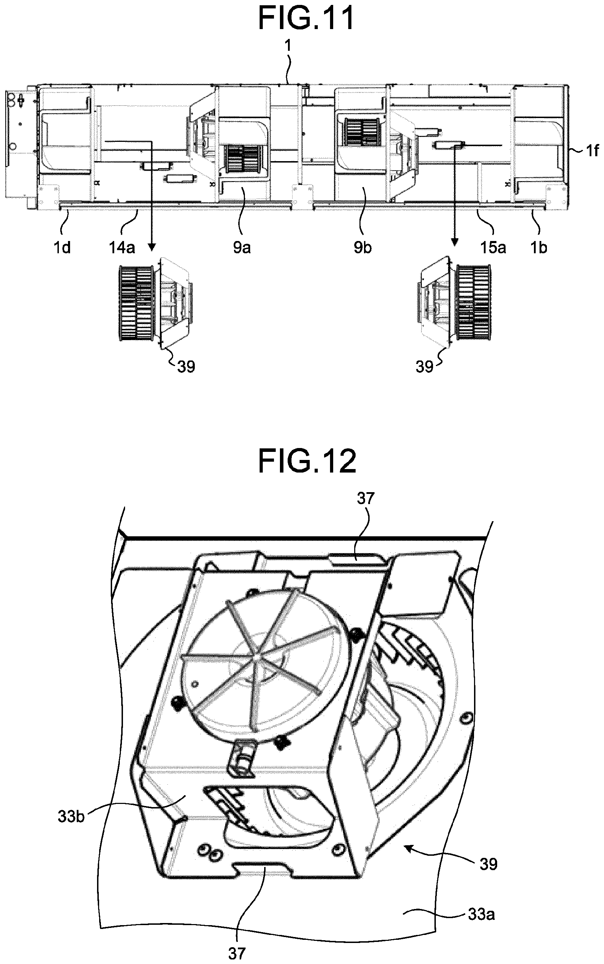

FIG. 9 is a diagram illustrating the placement of the fan units of the heat-exchange ventilation apparatus according to the embodiment as viewed from the outlet-port side face. FIG. 10 is a diagram illustrating the supply-air outer fan unit of the heat-exchange ventilation apparatus according to the embodiment as viewed from the outlet-port side face when the supply-air outer fan unit has been slid. FIG. 11 is a diagram illustrating how the fan units of the heat-exchange ventilation apparatus according to the embodiment are removed. The pre-supply-air-fan-unit-passage supply air path 6c includes a supply-air-outer-fan-unit counter-motor-side air path 16 that is a counter-motor-side air path of the supply-air outer fan unit 9; a supply-air-outer-fan-unit motor-side air path 16a that is a motor-side air path of the supply-air outer fan unit 9; and a supply-air-inner-fan-unit counter-motor-side air path 16b that is a counter-motor-side air path of the supply-air inner fan unit 9a. The pre-discharge-air-fan-unit-passage discharge air path 7c includes a discharge-air-outer-fan-unit counter-motor-side air path 17 that is a counter-motor-side air path of the discharge-air outer fan unit 9c; a discharge-air-outer-fan-unit motor-side air path 17a that is a motor-side air path of the discharge-air outer fan unit 9c; and a discharge-air-inner-fan-unit counter-motor-side air path 17b that is a counter-motor-side air path of the discharge-air inner fan unit 9b.

The supply-air-fan maintenance panel 14 is attached to the room-interior bottom face 1a of the casing 1 and blocks the supply-air-fan opening portion 14a, which is a maintenance opening for the fan maintenance. The discharge-air-fan maintenance panel 15 is attached to the room-exterior bottom face 1b and blocks the discharge-air-fan opening portion 15a, which is a maintenance opening for the fan maintenance. The supply-air-fan opening portion 14a communicates with the supply-air-outer-fan-unit motor-side air path 16a, and the discharge-air-fan opening portion 15a communicates with the discharge-air-outer-fan-unit motor-side air path 17a.

A procedure to remove the fans for the maintenance of the supply-air outer fan unit 9 and the supply-air inner fan unit 9a is described below with reference to FIGS. 4 to 11. The supply-air-fan maintenance panel 14, which is attached to the room-interior bottom face 1a, is removed through a maintenance opening placed in a ceiling board, a hand is inserted into the casing 1 through the supply-air-fan opening portion 14a, and the screws 38, which fix the air-path fixing portion 33a and the fan-unit fixing components 34 to each other, are unfastened.

Subsequently, the supply-air outer fan unit 9 except the fan-unit fixing components 34 is slid in a direction toward the room-interior side face 1e. The space in the supply-air-outer-fan-unit motor-side air path 16a is increased by a distance over which the supply-air outer fan unit 9 is moved toward the supply-air-outer-fan-unit counter-motor-side air path 16, thereby providing a space for the maintenance of the fan units. That is, a length L₁ of the supply-air-outer-fan-unit motor-side air path 16a in the axial direction of the fan motor 35 with the supply-air outer fan unit 9 fixed to the casing 1 is shorter than a length A of a fan assembly 39 with the supply-air outer fan unit 9 fixed to the casing 1. A length L₂ of the supply-air-outer-fan-unit motor-side air path 16a in the axial direction of the fan motor 35 with the supply-air outer fan unit 9 moved toward the supply-air-outer-fan-unit counter-motor-side air path 16 is longer than the length A of the fan assembly 39.

Subsequently, in the supply-air outer fan unit 9, the assembly fixing screws 36, which fix the fan-motor fixing portion 33b to the air-path fixing portion 33a, are unfastened, and the fan assembly 39, which includes the motor-side bell mouth portion 31a, the fan blade 32, and the fan motor 35 integrally, is moved toward the supply-air-outer-fan-unit motor-side air path 16a parallel with the motor shaft with the scroll casing 31 and the air-path fixing portion 33a left behind and then the fan assembly 39 is removed from the casing 1 through the supply-air-fan opening portion 14a.

Also for the supply-air inner fan unit 9a, after the supply-air outer fan unit 9 is slid toward the room-interior side face 1e to increase the space in the supply-air-outer-fan-unit motor-side air path 16a, the assembly fixing screws 36, which fix the fan-motor fixing portion 33b, are unfastened with the air-path fixing portion 33a of the supply-air inner fan unit 9a still fixed to the casing 1, and only the fan assembly 39 is moved toward the supply-air-outer-fan-unit motor-side air path 16a parallel with the motor shaft and then the fan assembly 39 is removed from the casing 1 through the supply-air-fan opening portion 14a.

A procedure to remove the fans for the maintenance of the discharge-air inner fan unit 9b and the discharge-air outer fan unit 9c is described next below. The discharge-air-fan maintenance panel 15, which is attached to the room-exterior bottom face 1b, is removed through a maintenance opening placed in a ceiling board, a hand is inserted into the casing 1 through the discharge-air-fan opening portion 15a, and the screws 38, which fix the air-path fixing portion 33a and the fan-unit fixing components 34 to each other, are unfastened.

Then, the discharge-air outer fan unit 9c except the fan-unit fixing components 34 is slid in a direction toward the room-exterior side face 1f. That is, a length L₃ of the discharge-air-outer-fan-unit motor-side air path 17a in the axial direction of the fan motor 35 with the discharge-air outer fan unit 9c fixed to the casing 1 is shorter than the length A of the fan assembly 39 with the discharge-air outer fan unit 9c fixed to the casing 1. A length L₄ of the discharge-air-outer-fan-unit motor-side air path 17a in the axial direction of the fan motor 35 with the discharge-air outer fan unit 9c moved toward the discharge-air-outer-fan-unit counter-motor-side air path 17 is longer than the length A of the fan assembly 39. The space in the discharge-air-outer-fan-unit motor-side air path 17a is increased by a distance over which the discharge-air outer fan unit 9c is moved toward the discharge-air-outer-fan-unit counter-motor-side air path 17, thereby providing a space for the maintenance of the fan units.

Subsequently, in the discharge-air outer fan unit 9c, the assembly fixing screws 36, which fix the fan-motor fixing portion 33b to the air-path fixing portion 33a, are unfastened, and only the fan assembly 39 is moved toward the discharge-air-outer-fan-unit motor-side air path 17a parallel with the motor shaft with the scroll casing 31 and the air-path fixing portion 33a left behind and then the fan assembly 39 is removed from the casing 1 through the discharge-air-fan opening portion 15a.

Also for the discharge-air inner fan unit 9b, after the discharge-air outer fan unit 9c is slid toward the room-exterior side face 1f to increase the space in the discharge-air-outer-fan-unit motor-side air path 17a, the assembly fixing screws 36, which fix the fan-motor fixing portion 33b, are unfastened with the air-path fixing portion 33a of the discharge-air inner fan unit 9b still fixed to the casing 1, and only the fan assembly 39 is moved toward the discharge-air-outer-fan-unit motor-side air path 17a parallel with the motor shaft and then the fan assembly 39 is removed from the casing 1 through the discharge-air-fan opening portion 15a.

As described above, the supply-air outer fan unit 9 and the discharge-air outer fan unit 9c can be each moved in the axial direction of the fan motor 35 toward the counter-motor-side space that communicates with the bell mouth portion 31b when the fixing with the casing 1 is released, and, additionally, the fan assembly 39, which includes the fan motor 35 and the fan blade 32, can be removed from the casing 1 through the supply-air-fan opening portion 14a or the discharge-air-fan opening portion 15a when the fan assembly 39 is separated from the scroll casing 31.

FIG. 12 is a perspective view of the fan motor of the supply-air fan units and the discharge-air fan units of the heat-exchange ventilation apparatus according to the embodiment. The supply-air fan units and the discharge-air fan units each include a fan-assembly positioning hook portion 37 on the air-path fixing portion 33a. The fan-assembly positioning hook portion 37 prevents the fan assembly 39 from falling when the assembly fixing screws 36, which fix the fan-motor fixing portion 33b to the air-path fixing portion 33a of the supply-air outer fan unit 9, the supply-air inner fan unit 9a, the discharge-air inner fan unit 9b, and the discharge-air outer fan unit 9c, are unfastened to remove the fan assembly 39.

As described above, in the heat-exchange ventilation apparatus 50 according to the embodiment, the supply-air outer fan unit 9 is retained by fixing, using screws, the fan-unit fixing components 34, which are attached to the air-path fixing portion 33a, to the room-interior bottom face 1a and the room-interior top face 1g of the casing 1. The discharge-air outer fan unit 9c is also retained by fixing, using screws, the fan-unit fixing components 34, which are attached to the air-path fixing portion 33a, to the room-exterior bottom face 1b and the room-exterior top face 1h of the casing 1. For the maintenance of the fans, thus, the supply-air outer fan unit 9 can be slid toward the room-interior side face 1e and the discharge-air outer fan unit 9c can be slid toward the room-exterior side face 1f by unfastening the screws 38, which fix the air-path fixing portions 33a to the fan-unit fixing components 34.

Additionally, the heat-exchange ventilation apparatus 50 according to the embodiment includes the supply-air-fan opening portion 14a between the supply-air outer fan unit 9 and the supply-air inner fan unit 9a, thereby facilitating the work to slide the supply-air outer fan unit 9 and the work to remove the fan assembly 39. Similarly, the heat-exchange ventilation apparatus 50 according to the embodiment includes the discharge-air-fan opening portion 15a between the discharge-air inner fan unit 9b and the discharge-air outer fan unit 9c, thereby facilitating the work to slide the discharge-air outer fan unit 9c and the work to remove the fan assembly 39.

In the heat-exchange ventilation apparatus 50 according to the embodiment, the supply-air outer fan unit 9 and the supply-air inner fan unit 9a are placed such that the respective fan motors 35 face each other; thus, the fan assemblies 39 can be removed through the supply-air-fan opening portion 14a after the removal of the supply-air-fan maintenance panel 14, which is attached to the room-interior bottom face 1a. In the heat-exchange ventilation apparatus 50 according to the embodiment, the discharge-air inner fan unit 9b and the discharge-air outer fan unit 9c are also placed such that the respective fan motors 35 face each other; thus, the fan assemblies 39 can be removed through the discharge-air-fan opening portion 15a after the removal of the discharge-air-fan maintenance panel 15, which is attached to the room-exterior bottom face 1b.

Additionally, the heat-exchange ventilation apparatus 50 according to the embodiment includes the supply-air-fan opening portion 14a and the discharge-air-fan opening portion 15a separately, thereby eliminating the need to remove the discharge-air inner fan unit 9b and the discharge-air outer fan unit 9c when the maintenance for the supply-air outer fan unit 9 and the supply-air inner fan unit 9a is performed. The heat-exchange ventilation apparatus 50 according to the embodiment also eliminates the need to remove the supply-air outer fan unit 9 and the supply-air inner fan unit 9a when the maintenance for the discharge-air inner fan unit 9b and the discharge-air outer fan unit 9c is performed. That is, the heat-exchange ventilation apparatus 50 according to the embodiment eliminates the need to remove a component that does not need to be removed during the fan unit maintenance.

The heat-exchange ventilation apparatus 50 according to the embodiment includes the supply-air-fan opening portion 14a and the discharge-air-fan opening portion 15a in the casing 1 on the bottom surface side, thereby eliminating the need to provide a space for removal of the fan units sideward of the casing 1 and thus allowing inhibition of an increase in space occupied by the heat-exchange ventilation apparatus above the ceiling.

Additionally, the heat-exchange ventilation apparatus 50 according to the embodiment uses the supply-air-outer-fan-unit counter-motor-side air path 16 and the discharge-air-outer-fan-unit counter-motor-side air path 17 for sliding the supply-air outer fan unit 9 and the discharge-air outer fan unit 9c, thereby allowing the spaces of the supply-air-outer-fan-unit motor-side air path 16a and the discharge-air-outer-fan-unit motor-side air path 17a to be increased and thus providing a fan maintenance space in the casing 1 without removing the fan units from the casing 1, inhibiting the maintenance space outside the casing 1, and inhibiting an increase in space occupied by the product above the ceiling.

As describe above, the heat-exchange ventilation apparatus 50 according to the embodiment enables facilitation of removal of a fan, reduction in size of the product, and reduction in space occupied by the product.

The heat-exchange ventilation apparatus 50 according to the embodiment can be configured to allow the supply-air inner fan unit 9a and the discharge-air inner fan unit 9b to be slid into the spaces of the supply-air-inner-fan-unit counter-motor-side air path 16b and the discharge-air-inner-fan-unit counter-motor-side air path 17b.

### Reference Signs List

1 casing; 1a room-interior bottom face; 1b room-exterior bottom face; 1c inlet-port side face; 1d outlet-port side face; 1e room-interior side face; 1f room-exterior side face; 1g room-interior top face; 1h room-exterior top face; 2 room-exterior inlet port; 3 room-exterior outlet port; 4 room-interior inlet port; 5 room-interior outlet port; 6 supply air path; 6a pre-heat-exchanger-passage supply air path; 6b post-heat-exchanger-passage supply air path; 6c pre-supply-air-fan-unit-passage supply air path; 6d post-supply-air-fan-unit-passage supply air path; 7 discharge air path; 7a pre-heat-exchanger-passage discharge air path; 7b post-heat-exchanger-passage discharge air path; 7c pre-discharge-air-fan-unit-passage discharge air path; 7d post-discharge-air-fan-unit-passage discharge air path; 8 bypass air path; 9 supply-air outer fan unit; 9a supply-air inner fan unit; 9b discharge-air inner fan unit; 9c discharge-air outer fan unit; 10 internal air-path partition member; 11 open/close damper; 12 heat exchanger; 13 heat-exchanger maintenance panel; 13a heat-exchanger opening portion; 14 supply-air-fan maintenance panel; 14a supply-air-fan opening portion; 15 discharge-air-fan maintenance panel; 15a discharge-air-fan opening portion; 16 supply-air-outer-fan-unit counter-motor-side air path; 16a supply-air-outer-fan-unit motor-side air path; 16b supply-air-inner-fan-unit counter-motor-side air path; 17 discharge-air-outer-fan-unit counter-motor-side air path; 17a discharge-air-outer-fan-unit motor-side air path; 17b discharge-air-inner-fan-unit counter-motor-side air path; 31 scroll casing; 31a, 31b bell mouth portion; 31c exit portion; 32 fan blade; 33a air-path fixing portion; 33b fan-motor fixing portion; 34 fan-unit fixing component; 35 fan motor; 36 assembly fixing screw; 37 fan-assembly positioning hook portion; 38 screw; 39 fan assembly; 42 control box; 50 heat-exchange ventilation apparatus.

## Claims

1. A heat-exchange ventilation apparatus (50), comprising:
a casing (1) including a supply air path (6) to supply air that is located outside a room to an inside of the room and a discharge air path (7) to discharge air that is located inside the room to an outside of the room;
a heat exchanger (12) placed in the casing (1) to allow heat exchange between a supply airflow that passes through the supply air path (6) and a discharge airflow that passes through the discharge air path (7);
a supply-air fan unit (9) fixed in the casing (1) to generate the supply airflow; and
a discharge-air fan unit (9c) fixed in the casing (1) to generate the discharge airflow, wherein
the casing (1) has a fan-maintenance opening portion (14a, 15a) in a bottom surface,
each of the supply-air fan unit (9) and the discharge-air fan unit (9c) includes:
a fan blade (32) to generate the supply airflow or the discharge airflow;
a fan motor (35) to rotate the fan blade (32); and
a scroll casing (31), on one face side of which the fan motor (35) is placed, the scroll casing (31) including a bell mouth portion (31b) in another face facing the one face to admit air, the scroll casing (31) accommodating the fan blade (32), **characterized by**
at least one of the supply-air fan unit (9) and the discharge-air fan unit (9c) is movable in an axial direction of the fan motor (35) toward a counter-motor-side air path (16, 17) that communicates with the bell mouth portion (31b) when fixing to the casing (1) is released, and a fan assembly (39) that includes the fan motor (35) and the fan blade (32) is removable from the casing (1) through the fan-maintenance opening portion (14a, 15a) when the fan assembly (39) is separated from the scroll casing (31).

2. The heat-exchange ventilation apparatus (50) according to claim 1, wherein the supply-air fan unit (9) comprises a plurality of supply-air fan units (9, 9a) and the discharge-air fan unit (9c) comprises a plurality of discharge-air fan units (9b, 9c), and
the supply-air fan units (9, 9a) and the discharge-air fan units (9b, 9c) are placed side by side in the axial direction of the fan motors (35).

3. The heat-exchange ventilation apparatus (50) according to claim 1, wherein at least one of the supply-air fan unit (9) and the discharge-air fan unit (9c) has the bell mouth portion (31a) in the one face of the scroll casing (31).

4. The heat-exchange ventilation apparatus (50) according to any one of claims 1 to 3, wherein
a length (L₁, L₂, L₃, L₄) of a motor-side air path (16a, 17a) in the axial direction of the fan motor (35) of at least one of the supply-air fan unit (9) and the discharge-air fan unit (9c) movable to the counter-motor-side air path (16, 17) is shorter than a length (A) of the fan assembly (39) when the supply-air fan unit (9) or the discharge-air fan unit (9c) is fixed to the casing (1), and is longer than a length (A) of the fan assembly (39) when the supply-air fan unit (9) or the discharge-air fan unit (9c) is moved to the counter-motor-side air path (16, 17).

5. The heat-exchange ventilation apparatus (50) according to claim 4, wherein the fan-maintenance opening portion (14a, 15a) communicates with the motor-side air path (16a, 17a).

## Patentansprüche

1. Wärmeaustauschbelüftungsvorrichtung (50), umfassend:
ein Gehäuse (1), aufweisend einen Zuluftpfad (6), um Luft, die sich außerhalb eines Raums befindet, zu einer Innenseite des Raums zuzuführen, und einen Abluftpfad (7), um Luft, die sich innerhalb des Raums befindet, zu einer Außenseite des Raumes abzuführen;
einen Wärmetauscher (12), der im Gehäuse (1) angeordnet ist, um Wärmeaustausch zwischen einem Zuluftstrom, der den Zuluftpfad (6) passiert, und einem Abluftstrom, der den Abluftpfad (7) passiert, zu ermöglichen;
eine Zuluftlüftereinheit (9), die im Gehäuse (1) fixiert ist, um den Zuluftstrom zu erzeugen; und
eine Abluftlüftereinheit (9c), die im Gehäuse (1) fixiert ist, um den Abluftstrom zu erzeugen, wobei
das Gehäuse (1) einen Lüfterwartungsöffnungsabschnitt (14a, 15a) in einer Bodenoberfläche aufweist,
jede von der Zuluftlüftereinheit (9) und der Abluftlüftereinheit (9c) aufweist:
einen Lüfterflügel (32), um den Zuluftstrom oder den Abluftstrom zu erzeugen;
einen Lüftermotor (35), um den Lüfterflügel (32) zu rotieren; und
ein Spiralgehäuse (31), an dessen einer Stirnfläche der Lüftermotor (35) angeordnet ist, wobei das Spiralgehäuse (31) einen Glockenformabschnitt (31b) in einer anderen Fläche aufweist, die der Stirnfläche zugewandt ist, um Luft eintreten zu lassen, wobei das Spiralgehäuse (31) den Lüfterflügel (32) aufnimmt, **dadurch gekennzeichnet, dass**
zumindest eine von der Zuluftlüftereinheit (9) und der Abluftlüftereinheit (9c) in einer axialen Richtung des Lüftermotors (35) zum gegenmotorseitigen Luftpfad (16, 17), der mit dem Glockenformabschnitt (31b) kommuniziert, beweglich ist, wenn die Fixierung am Gehäuse (1) gelöst wird,
und eine Lüfterbaugruppe (39), die den Lüftermotor (35) und den Lüfterflügel (32) umfasst, durch den Lüfterwartungsöffnungsabschnitt (14a, 15a) aus dem Gehäuse (1) entfernt werden kann, wenn die Lüfterbaugruppe (39) vom Spiralgehäuse (31) getrennt wird.

2. Wärmeaustauschbelüftungsvorrichtung (50) nach Anspruch 1, wobei die Zuluftlüftereinheit (9) eine Vielzahl von Zuluftlüftereinheiten (9, 9a) umfasst, und die Abluftlüftereinheit (9c) eine Vielzahl von Abluftlüftereinheiten (9b, 9c) umfasst, und
die Zuluftlüftereinheiten (9, 9a) und die Abluftlüftereinheiten (9b, 9c) Seite an Seite in der axialen Richtung des Lüftermotors (35) angeordnet sind.

3. Wärmeaustauschbelüftungsvorrichtung (50) nach Anspruch 1, wobei zumindest eine von der Zuluftlüftereinheit (9) und der Abluftlüftereinheit (9c) den Glockenformabschnitt (31a) in der einen Fläche des Spirallüfters (31) aufweist.

4. Wärmeaustauschbelüftungsvorrichtung (50) nach einem der Ansprüche 1 bis 3, wobei
eine Länge (L₁, L₂, L₃, L₄) eines motorseitigen Luftpfades (16a, 17a) in der axialen Richtung des Lüftermotors (35) von zumindest einer der Zuluftlüftereinheit (9) und der Abluftlüftereinheit (9c), die zum gegenmotorseitigen Luftpfad (16, 17) bewegbar ist, kürzer ist als eine Länge (A) der Lüfterbaugruppe (39), wenn die Zuluftlüftereinheit (9) oder die Abluftlüftereinheit (9c) am Gehäuse (1) fixiert ist, und länger ist als eine Länge (A) der Lüfterbaugruppe (39), wenn die Zuluftlüftereinheit (9) oder die Abluftlüftereinheit (9c) zum gegenmotorseitigen Luftpfad (16, 17) bewegt wird.

5. Wärmeaustauschbelüftungsvorrichtung (50) nach Anspruch 4, wobei der Lüfterwartungsöffnungsabschnitt (14a, 15a) mit dem motorseitigen Luftpfad (16a, 17a) kommuniziert.

## Revendications

1. Appareil de ventilation à échange de chaleur (50) comprenant :
un carter (1) comprenant une trajectoire d'air d'alimentation (6) pour fournir l'air, qui est positionné à l'extérieur d'une pièce, à un intérieur de la pièce et une trajectoire d'air de décharge (7) pour décharger l'air, qui est positionné à l'intérieur de la pièce, à un extérieur de la pièce ;
un échangeur de chaleur (12) placé dans le carter (1) pour permettre l'échange de chaleur entre l'écoulement d'air d'alimentation qui passe par la trajectoire d'air d'alimentation (6) et un écoulement d'air de décharge qui passe par la trajectoire d'air de décharge (7) ;
une unité de ventilateur d'air d'alimentation (9) fixée dans le carter (1) pour générer l'écoulement d'air d'alimentation ; et
une unité de ventilateur d'air de décharge (9c) fixée dans le carter (1) afin de générer l'écoulement d'air de décharge, dans lequel :
le carter (1) a une partie d'ouverture d'entretien de ventilateur (14a, 15a) dans une surface inférieure,
chacune parmi l'unité de ventilateur d'air d'alimentation (9) et l'unité de ventilateur d'air de décharge (9c) comprend :
une pale de ventilateur (32) pour générer l'écoulement d'air d'alimentation ou bien l'écoulement d'air de décharge ;
un moteur de ventilateur (35) pour faire tourner la pale de ventilateur (32) ; et
un carter à volute (31), sur un côté de face duquel le moteur de ventilateur (35) est placé, le carter à volute (31) comprenant une partie de tulipe d'aspiration (31b) dans une autre face faisant face à la première face pour admettre l'air, le carter à volute (31) logeant la pale de ventilateur (32), **caractérisé par** :
au moins l'une parmi l'unité de ventilateur d'air d'alimentation (9) et l'unité de ventilateur d'air de décharge (9c) est mobile dans une direction axiale du moteur de ventilateur (35) vers une trajectoire d'air du côté du moteur antagoniste (16, 17) qui communique avec la partie de tulipe d'aspiration (31b) lorsque la fixation sur le carter (1) est retirée, et un ensemble de ventilateur (39) qui comprend le moteur de ventilateur (35) et la pale de ventilateur (32), peut être retiré du carter (1) par la partie d'ouverture d'entretien de ventilateur (14a, 15a) lorsque l'ensemble de ventilateur (39) est séparé du carter à volute (31).

2. Appareil de ventilation à échange de chaleur (50) selon la revendication 1, dans lequel l'unité de ventilateur d'air d'alimentation (9) comprend une pluralité d'unités de ventilateur d'air d'alimentation (9, 9a) et l'unité de ventilateur d'air de décharge (9c) comprend une pluralité d'unités de ventilateur d'air de décharge (9b, 9c), et
les unités de ventilateur d'air d'alimentation (9, 9a) et les unités de ventilateur d'air de décharge (9b, 9c) sont placées côte à côte dans la direction axiale des moteurs de ventilateur (35).

3. Appareil de ventilation à échange de chaleur (50) selon la revendication 1, dans lequel au moins l'une parmi l'unité de ventilateur d'air d'alimentation (9) et l'unité de ventilateur d'air de décharge (9c) a la partie de tulipe d'aspiration (31a) dans la première face du carter à volute (31).

4. Appareil de ventilation à échange de chaleur (50) selon l'une quelconque des revendications 1 à 3, dans lequel :
une longueur (L₁, L₂, L₃, L₄) d'une trajectoire d'air du côté du moteur (16a, 17a) dans la direction axiale du moteur de ventilateur (35) d'au moins l'une parmi l'unité de ventilateur d'air d'alimentation (9) et l'unité de ventilateur d'air de décharge (9c) mobile vers la trajectoire d'air du côté du moteur antagoniste (16, 17) est plus courte qu'une longueur (A) de l'ensemble de ventilateur (39) lorsque l'unité de ventilateur d'air d'alimentation (9) ou l'unité de ventilateur d'air de décharge (9c) est fixée sur le carter (1), et est plus longue qu'une longueur (A) de l'ensemble de ventilateur (39) lorsque l'unité de ventilateur d'air d'alimentation (9) ou l'unité de ventilateur d'air de décharge (9c) est déplacée vers la trajectoire d'air du côté du moteur antagoniste (16, 17).

5. Appareil de ventilation à échange de chaleur (50) selon la revendication 4, dans lequel la partie d'ouverture d'entretien de ventilateur (14a, 15a) communique avec la trajectoire d'air du côté du moteur (16a, 17a).
